# EUROPEAN PATENT APPLICATION

(11) **EP 4 607 735 A1**
(43) Date of publication of application: **27.08.2025**
(21) Application number: 24159618.8
(22) Date of filing: 26.02.2024
(51) Int. Cl.: H02J 3/36, H02J 4/00

(54) **ELECTRICAL POWER TRANSMISSION SYSTEM**

(71) Applicant: Hitachi Energy Ltd, 8050 Zürich (CH)
(72) Inventor: MARTINO, Edoardo, 5400 Baden (CH); DIJKHUIZEN, Frans, 72631 Skultuna (SE)
(74) Representative: Epping - Hermann - Fischer

(57) **Abstract**

An electrical power transmission system (100) comprises a power source (1) for supplying power, a power load (3) that requires electrical power for operation, and a superconducting DC unit (2) that comprises one or more superconducting DC cables (4) and that electrically connects the power source (1) and the power load (3) for DC high power transmission such that the system (100) is operatable at a medium voltage in a range of 100 kV or less.

## Description

The present disclosure is related to electrical power transmission system.

Electrical loads or consumers require power transmission. Nowadays, consumers can also be producers that can feed electrical power into the power grid. In general, it is a challenge to provide an electrical power transmission system that enables a clear, efficient and cost-saving power transmission.

Thus, it is an objective to provide an electrical power transmission system that enables a clear, efficient and cost-saving power transmission.

According to an embodiment, an electrical power transmission system comprises a power source, e.g. a power grid, for supplying power. The system further comprises a power load, e.g. a consumer and/or a producer, that requires electrical power for operation. The system further comprises a superconducting DC unit that comprises one or more superconducting DC cables which electrically connects the power source and the power load for DC high power transmission such that the system is operatable at a medium voltage in a range of 100 kV or less.

For example, the system comprises one or more superconducting DC cables which electrically connects the power source, the power load and an energy storage system for exchange of energy via DC power transmission.

The described electrical power transmission system is feasible with a clear structure with few components and enables an efficient and cost-saving medium voltage direct current (MVDC) power transmission. The MVDC power transmission by means of superconducting cable allows to reduce losses during voltage transmission and to contribute to an enhanced efficiency of electrical power transmission due to the integration of a high power MVDC grid by means of superconducting DC unit. The electrical power transmission system can also be operated in other, e.g. higher voltage ranges. However, the electrical power transmission system is particularly capable of enabling an operational and particularly economical power transmission in the aforementioned voltage range of 100 kV or less due to the superconducting DC unit.

According to a further embodiment of the electrical power transmission system, the power source is configured to supply high voltage AC power and the superconducting DC unit is electrically connected to the power source by means of a step down conversion unit such that medium voltage high current DC power is supplied to the superconducting DC unit.

According to a further embodiment, the electrical power transmission system further comprises an energy storage system which is electrically connected to the superconducting DC unit and/or the conversion unit to exchange electrical energy. Such a configuration of the described system allows for a beneficial integration of high power MVDC grid by means of superconducting cable for electrical power transmission wherein electrical energy can be supplied or stored in the energy storage system or requested or extracted therefrom if required. The energy storage system can comprise a plurality of energy storage devices working with different operating parameters including different response time and/or power supply requirements.

According to a further embodiment of the electrical power transmission system, the conversion unit is configured to control the power flow between the power source, the superconducting DC unit and the energy storage system.

According to a further embodiment of the electrical power transmission system, the superconducting DC unit is configured to be operatable at a voltage that matches an operational voltage of the power load and/or an operational voltage of the energy storage system.

According to a further embodiment, the electrical power transmission system further comprises a cryogenic cooling unit that is coupled to the superconducting DC unit for cooling. The cryogenic cooling unit can comprise one or more cable and/or one or more pipelines arranged adjacent to or surrounding a superconducting cable of the superconducting DC unit.

According to a further embodiment of the electrical power transmission system, the power source and the power load are connected by means of the superconducting DC unit conversion stepless. Alternatively or additionally, the power load and the superconducting direct current cable unit are directly connected undistributed and/or rectifierless. For example, in a particularly favourable case the power source is realized as an DC power grid transmits the electrical power to the superconducting DC unit and the superconducting DC unit transmits the electrical power to the power load realized as a DC consumer. Alternatively or additionally, the electrical DC power can be transmitted by the energy storage system. Thus, the electrical power transmission system can be set up with a very clear structure and very few units or components.

Alternatively, the power load is electrically connected to the superconducting DC unit by means of an AC-grid via an AC/DC power converter and/or a rectifier and/or an inverter and/or a distributor.

According to a further embodiment, the electrical power transmission system comprises a power flow and protection unit which is configured to monitor an operation of the superconducting DC unit in order to control a secure and reliable operation of the electrical power transmission system and the superconducting DC unit, in particular. Such a power flow and protection unit can include a fault current limiter. The power flow and protection unit can be further configured to monitor and/or control the cryogenic cooling unit and/or the energy storage system.

According to a further embodiment, the electrical power transmission system comprises one or more conventional high voltage cables electrically coupled to the power load and the power source to provide a backup power supply.

It is a recognition of the present disclosure that superconducting cables can offer on the opportunity to transmit large quantity of power at relative low operating voltage, thanks to the absence or very low material electrical resistance. Improvement of commercially available superconducting cable and cryogenic cooling devices is rapidly progressing due to a variety of external driving factors among them: e.g. x10 orders increase over the last 5 years of superconducting materials (lead by nuclear fusion demonstrators), increasing demand of highly efficient and reliable cryogenic cooling machines used for liquified natural gas transportation.

It is a further recognition of the present disclosure that even if the market of superconducting cables from energy transmission is today non-existent, technological breakthrough in superconducting material manufacturing, capable of increasing their yield and fabrication length can possibly be developed soon. Such a breakthrough in manufacturing capabilities can open market opportunities for cables in the energy sector, where long cable length and lower cost are required. On top of the technology development, market change in power transmission and distribution, driven by massive electrification of industrial processes, electrical mobility and introduction of large electrochemical conversion devices (like hydrogen electrolysis) could promote applications where superconducting cables might become economically convenient. It is therefore expected that increased offer of high temperature superconducting cables would enable commercial products in the power grid sector within the next years.

The described electrical power transmission system is based on a DC superconducting cable designed to provide large power to medium voltage loads that require large current. Preferably, the electrical power transmission system is further configured to exchange power with a medium voltage energy storage system. A range of medium voltage can be set to 100 kV or less. Medium voltage can also be in the range of 20 kV up to 80 kV or 26 kV up to 69 kV. A current rating is given by the expected power, and high or large currents from 5 kA and above can apply.

The electrical power transmission system addresses the challenges of integrating loads and also future loads in a power grid, with a high current demand and DC operation, such as large-scale electrochemical conversion plans (H₂ electrolysers), logistic hubs for electric vehicles charging and data centers. On the consumers side it is also coupled with increased need to add an energy storage system to strengthen the power grid from varying power generation from renewable energy, for example.

Current conventional power transmission relies in AC high voltage, e.g. > 110 kV, to reduce ohmic losses, for example 115kV, 138kV, 161kV, 230kV, 345kV, 500kV, or 765kV. To supply power to medium voltage high current DC loads, multiple level of power conversion is required with today grid design, requiring a large number of power electronics and transformers. The described electrical power transmission system relies on superconducting cables, which enable the change in operating conditions to high current MVDC transmission including the potential of removing intermediate conversion steps. The electrical power transmission system can be further adapted to evolving power grid demand and energy storage systems which can also be integrated in a more cost-effective way thanks to the lower operating volage enabled by DC superconducting cables.

The energy storage system can comprise batteries, supercapacitors banks and/or hydrogen electrolysers/fuel cells with an operating voltage that is defined by series connection of units or devices with intrinsic operating voltage under 5 V, for example. Their operating voltage is therefore limited to few kV by practical constrain of number of energy storage devices electrically connected in series. The large difference in characteristic voltages between power transmission and an energy storage system poses challenges for their integration. The described electrical power transmission system enables the implementation of a medium voltage superconducting DC unit for connecting a power transmission terminal to high power loads, capable to transmit up to the order of GW power, for example, that required high current DC, and coupling them with a large-scale energy storage system which may provide a power capacity large than 100MW and high voltage substation. A direct coupling of the power transmission with an energy storage enables beneficial performances of the electrical power transmission system. The storage capacity does not need to be of large scale and can be considered in a broad range of capacity.

In addition, the described configurations of the electrical power transmission system enable a large reduction in HVDC converter volume or MCDC converter volume or converter volume in general and footprint, to favor its integration in densely built urban and industrial landscape. MVDC converters or converters volume is defined by the required clearance distances between components operating at large potential difference. Accordingly, the medium voltage DC transmission allows for easier integration of energy storage to support load in densely built areas. The energy storing device is on a connection terminal outside of the densely built are of the loads.

The electrical power transmission system is configured to supply power to high power DC loads with high current requirements in a cost effective manner. This can preferably include reducing the number of intermediate conversion step by transmitting power preferably at the same voltage level as the supplied medium voltage DC loads and coupling the power transmission with an energy storage system by operating them at the same potential level, to optimize integration with renewables and power arbitrage. Additionally, this can include allowing connection of high power DC loads to a remote high voltage substation. Thus, the electrical power transmission system represents a shift, in particular a paradigm shift, of power transmission from high-voltage AC to medium voltage and high-current DC. For increasing system efficiency by exploiting varying power generation by renewables energies and power arbitrage, the medium voltage DC transmission by means of the superconducting unit is preferably coupled to a medium voltage energy storage system. Such a configuration can be technically enabled by adoption of DC superconducting cable and superconducting devices in virtue of their capability of allowing design of high-power, medium volage and high-amperage cables in a cost and energy efficient way and allowing independent control of voltage level and current flow due to zero or approximately zero electrical resistance.

The electrical power transmission system has the further potential of allowing a compact DC to AC high power converter to supply AC loads in areas where installation of high voltage cable and high voltage substation would result in high engineering costs due to space availability constrains. The use of MVDC converter in combination with superconducting cables can significantly reduce the converter footprint thanks to the lower operating voltage and consequent reduced clearance distances. Estimates, which have been made in connection with the present disclosure, identify that for a 2 GW converter the operation with a MVDC superconducting cable can reduce the volume by 600, by reducing operational voltage from 525kV to 100kV DC, for example. Current technologies would face the challenge of the necessary combination of high-power capacity with high voltage or would have increased costs if operated at medium voltage due to the large quantity of conductors required.

The described configurations of the electrical power transmission system enable one or more of the following benefits:
- MVDC designed to supply emerging high power DC loads and power infeed to densely built urban locations (e.g. logistic hubs for electrified vehicle: port charging infrastructure for EV trucks, electric ship and power to ship);
- integration of DC transmission and storage, and reduction of intermediate conversion steps by lowering the operating voltage of a DC power transmission connection, using high current superconducting cable;
- power system designed for integration densely built areas by saving on engineering costs thanks to reduce converter footprint. Obtained by lower dimension of the AC/DC converter and removal of a transformer.

Exemplary embodiments are explained in the following with the aid of schematic drawings and reference numbers. The figures show:

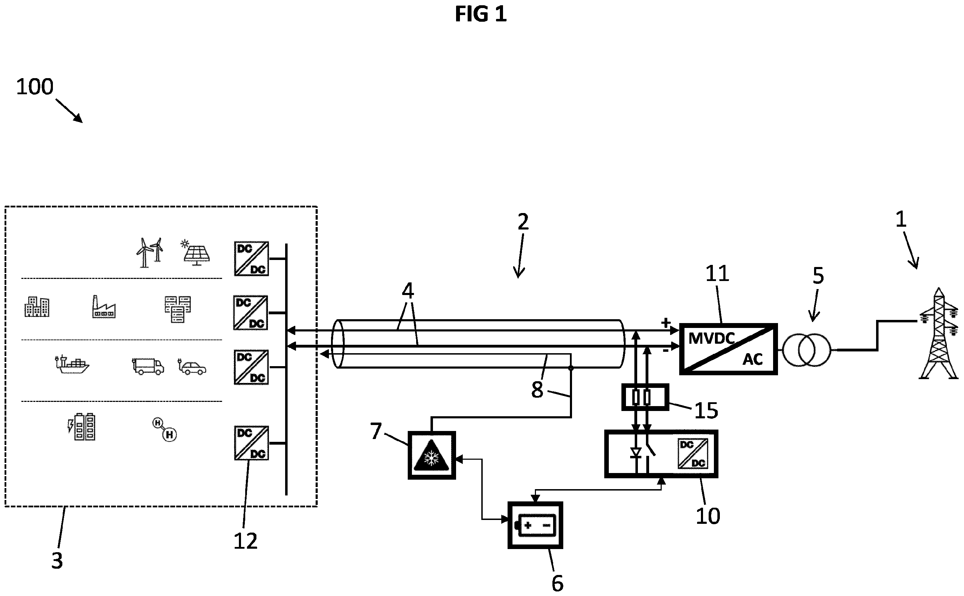

- Figures 1-5: embodiments of an electrical power transmission system.

The accompanying figures are included to provide a further understanding. Identical reference numbers designate elements or components with identical functions. In so far as elements or components correspond to one another in terms of their function in different figures, the description thereof is not repeated for each of the following figures. For the sake of clarity elements might not appear with corresponding reference symbols in all figures, possibly.

Figure 1 shows an embodiment of an electrical power transmission system 100 configured for medium voltage direct current (MVDC) power transmission. The electrical power transmission system 100 comprises a power source in the form of a power grid 1 for supplying power and a power load realized by consumers 3 that require electrical power for operation. The electrical power transmission system 100 further comprises a superconducting DC unit 2 that comprises one or more superconducting DC cables 4 that electrically connects the power grid 1 and the consumers 3. The electrical power transmission system 100 is configured to enable DC high power transmission operatable at a medium voltage in a range of 100 kV or less.

The consumers 3 can partly act as producers as well and can feed electricity into the electrical power transmission system 100. Accordingly, the consumer 3 can also be referred to as prosumers. Thus, the electrical power transmission system 100 can be operatable in both directions or bidirectionally in terms of power consumption and power generation (the ability of bidirectional functioning of respective elements is indicated by the arrows). The consumers 3 can be realized as DC loads, e.g. electrochemical conversion devices (electroliers), battery charging infrastructure, MVDC grid in Industrial, urban and data centres. The consumers 3 can be connected to the superconducting DC unit 2 by means of one or more DC/DC converters 12.

According to figure 1, the electrical power transmission system 100 further comprises a conversion unit 5 and an AC-MVDC-converter 11 such that if the power grid 1 supplies high voltage AC power a step down conversion can be performed to convert the power transmission to medium voltage high current DC power for transmission by means of the superconducting DC unit 2. The power conversion unit 5 and the converter can exchange electrical energy either with the superconducting cable 4 or with an energy storage system 6.

The energy storage system 6 is electrically connected to the superconducting DC unit 2 and to the conversion unit 5 to exchange electrical energy. The energy storage system 6 can either provide energy to the consumers 3 on the receiving end of accumulate energy generated by local power generation units. The energy storage system 6 is electrically coupled to a power flow and protection unit 10 which is configured to monitor and/or control an operation of the superconducting DC unit 2. The power flow and protection unit 10 can comprise a fault current limiter 15 both electrically coupled to the energy storage system 6 and to the superconducting DC unit 2 and the converter 11 or conversion unit 5. Alternatively, the fault current limiter 15 can form a separate component to the power flow and protection unit 10.

Moreover, the electrical power transmission system 100 comprises a cryogenic cooling unit 7 that is coupled to the superconducting DC unit 2 for cooling. The cryogenic cooling unit 7 comprises a cable and/or a pipeline 8 arranged adjacent to or surrounding a superconducting cable 4 of the superconducting DC unit 2.

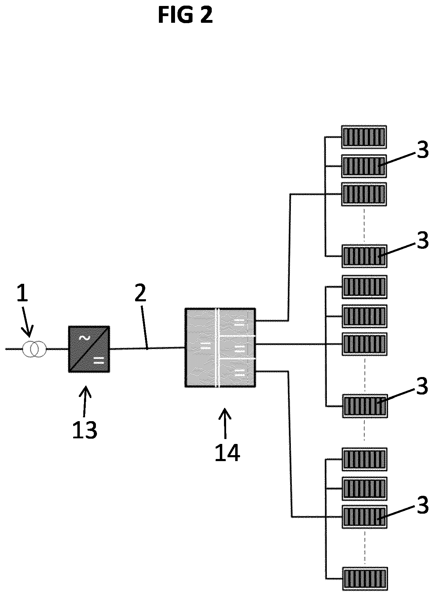

Figure 2 schematically illustrates that the electrical power transmission system 100 can be set up with a very clear structure and only a reduced number of components compared to conventional power transmission systems. If the power grid 1 provides an AC power transmission a rectifier 13 can be set up to rectify the AC power to DC power for further power transmission by means of the superconducting unit 2. A distributer 14 can be implemented to divide the power supply according to the requirements of the one or more DC-consumers 3. However, in a favourable case the electrical power transmission system 100 can be configured such that the power grid 1 and the consumers 3 are connected by means of the superconducting DC unit 2 conversion stepless, undistributed and/or rectifierless. In particular, the consumers 3 and the superconducting DC cable unit 2 can be directly connected without a need for a distributor and/or a rectifier and/or converter. The further advantage compared to conventional high voltage transmission, is the absence multiple of voltage conversion steps, wherein voltage is first raised above 100 kV for transmission and then reduce for distribution.

According to figure 1, the electrical power transmission system 100 is directed to supply power to and/or get power from DC-consumers 3. Alternatively or additionally, the superconducting cable 4 can electrically connect to either a distribution AC grid via AC/DC power converter 9 and/or to a DC distribution grid (see figures 3 to 5). Figure 3 illustrates an alternative embodiment of the electrical power transmission system 100 which is directed to supply power to and/or get power from AC-consumers 3, wherein an AC-DC power converter 9 is electrically coupled between the Ac-consumers 3 and the superconducting DC unit 2. The embodiments according to the figures 4 and 5 show a respective configuration of the electrical power transmission system 100 which is enables to supply power to and/or get power from both AC-consumers 3 and/or DC-consumers 3.

The electrical power transmission system 100 enables to provide electrical energy to DC loads via a high-current medium voltage DC superconducting cable 4. This connection can supply power to a medium voltage DC grid of loads such as large-scale electrochemical conversion plants, data centres, electric vehicles logistic hubs (see figure 1). The MVDC superconducting cable is coupled with the energy storage system 6, which has a comparable operating voltage and exchange power, preferably. The operating voltage of the superconducting unit 2 is preferably adaptable to that of the energy storage system6 which is preferably also matched to that of DC loads 3 and/or power generation on the opposite end of the power transmission line.

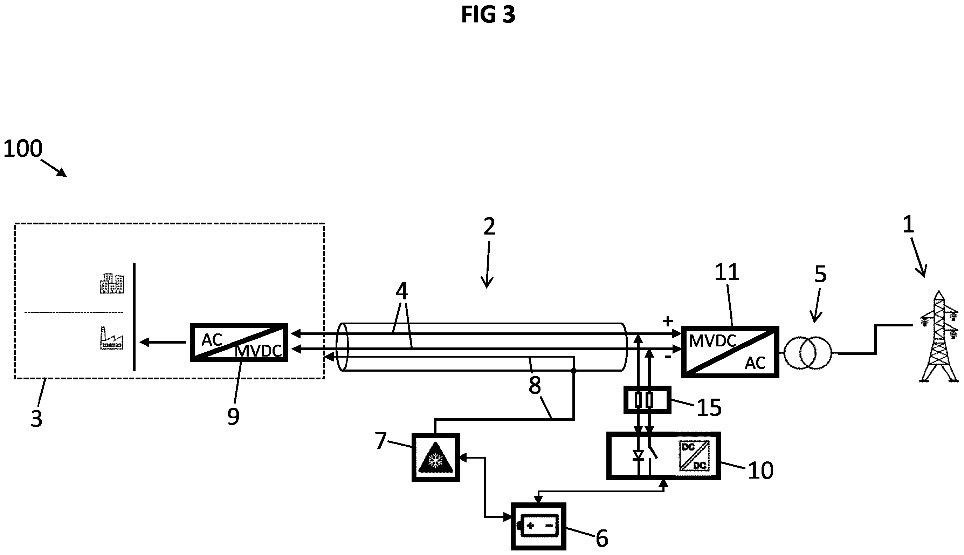

According to figure 3, the electrical power transmission system 100 can be configured to include the compact medium-voltage high power AC/DC converter 9 electrically coupled to MVDC superconducting cable 4. The converter 9 is feasible with reduced dimensions compared to conventional converters thanks to the limited required insulation distances and is therefore suitable for installation in locations with limited available space. Independent forecast suffer a volume reduction of 60% for a 2GW power converter using superconducting cables 4 compared to a conventional power transmission by means of 525 kV cables, for example.

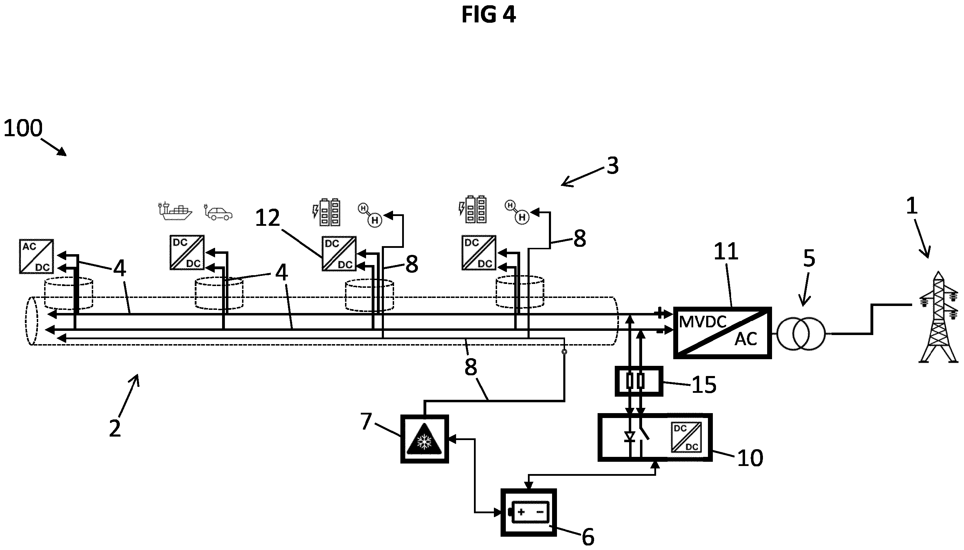

In figure 4 the electrical power transmission system 100 is configured with a variation of the power supply to multiple DC loads or consumers 3, where the one or more superconducting cables 4 have multiple terminals along its length. Each terminal can be used to supply power to a DC load or to a power converter, either DC/DC or DC/AC. The terminal can also be used to supply the cryogenic fluid to the respective terminal from the cryogenic cooling unit 7.

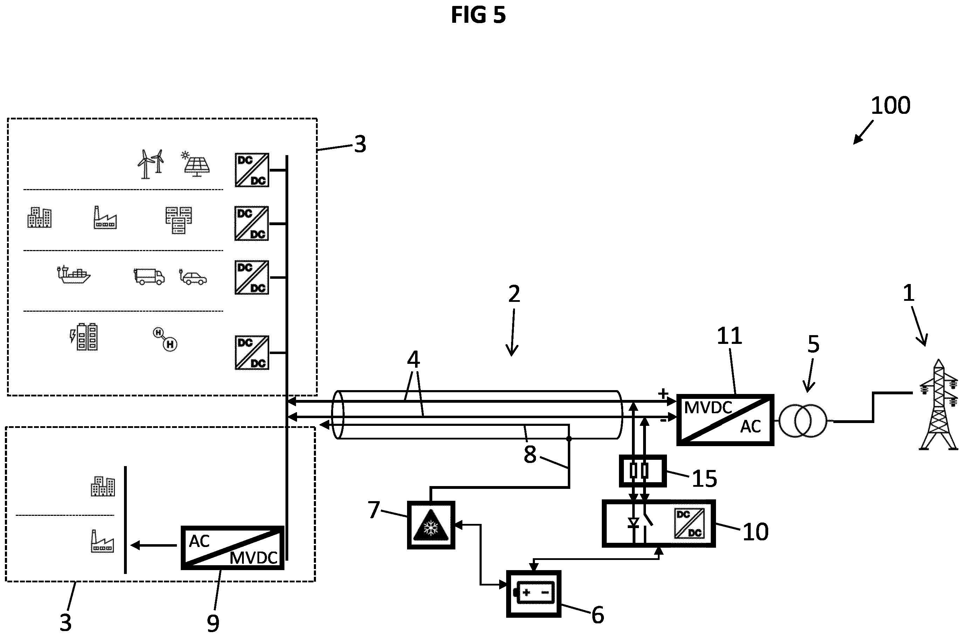

Figure 5 shows a combination of both DC and AC loads 3 in a point-to-point configuration of the electrical power transmission system 100.

The illustrated and described configurations of the electrical power transmission system 100 enable power transmission by DC high-current medium-voltage and DC bulk power transmission at distribution voltage equal to or less than 100 kV. A directly connected power transmission without intermediate conversion steps is feasible for supplying high power DC loads in interaction with the energy storage system 6 at medium voltage by means of the superconducting DC cables 4 operating at high current and medium voltage including integrated distribution and energy storage at medium voltage.

Preferably, a voltage level of electrical power transmission in the superconducting MVDC cable 4 is matched with that of the MV high power DC loads 3 and the MV energy storage system 6. The direct connection can be set up by converter less connection between superconducting MVDC cable 4 and the energy storage system 6 by means of the superconducting cable properties to control voltage level independent to current flow.

Superconducting devices for control and protection can be integrated, such as the fault current limiter 15 and the power flow and protection unit 10 forming a superconducting current switch (thermally and/or magnetically activatable) for protection and control of power flow between the superconducting DC cables 4 and the energy storage system 6.

The electrical power transmission system 100 further allows to lower a duty cycle for potential DC/DC converter connecting the MVDC converter to the medium voltage energy storage system 6 thanks to a reduced operating voltage difference. Moreover, it is possible to move the energy storage system 6, such as batteries, supercapacitors banks or superconducting magnetic energy storage (SMES), hydrogen electrolysers/fuel cells away from a density-built area (e.g. a city or a port) removing engineering challenges in term of construction and safety.

A DC backbone connection for bulk power transmission at a distribution voltage equal to or less than 100 kV is feasible as well. A direct connection of the power transmission superconducting DC cable 4 to a MVDC grid and high current density DC loads 3 enables to reduce the number of intermediate power conversion steps. Exampled of supplied DC loads are electrochemical conversion devices (electroliers), battery charging infrastructure, MVDC grid in Industrial, urban and data centres. In addition, the superconducting MVDC unit 2 can be connected to a plurality of DC/DC converters 12. Furthermore, high power medium voltage DC loads 3 in urban/industrial area allows to remote high voltage substation and large-scale energy storage system. Thus, the electrical power transmission system 100 also enables to remove engineering challenges in term of construction and safety.

Alternatively or additionally, power supply to a AC distribution grid can be set up by means of the compact DC/AC power converter 9. Such a compact DC converter 9 enables to satisfy high electrical power demands in density-built area. The MVDC to AC converter 9 can be realized with reduced clearances distance thanks to the lower operating voltage less than 100 kV, for example. In addition, the electrical power transmission system 100 has the potential for direct intergradation in a DC microgrid (e.g. charging infrastructures and enables to remove the need for a corresponding transformer.

The electrical power transmission system 100 can further provide a direct connection to the cryogenic cooling unit 7 of the superconducting cable 4 to a long capacity energy storage system 6. An ensured continuous operation of the cryogenic cooling unit 7 in case of outage, allow immediate restart of the electrical power transmission trough the superconducting cable 4. Combining the electrical power distribution with the cryogenic pipeline 8 is set up for operation of the superconducting cable 4 and can include other cryogenic pipelines that has use the opportunistic advantage of sharing the cooling system for improved energy efficiency. Cryogenic fluids transferred can be used for energy or industrial need at the receiving ends, such could be the case of liquified oxygen, nitrogen, hydrogen, methane, LNG.

The energy storage system 6 can be composed by different energy storing devices, each with different energy and power rating to compensate for different required response time and energy requirement. Devices potential to be integrated can be batteries, electrochemical storing devices including hydrogen fuel cells and electrolysis, mechanical energy storing devices, electrical energy storing devices as capacitors and/or supercapacitors, magnetic energy storing devices as superconducting magnetic energy storage (SMES). The energy storage system 6 can serve as a short-term back-up power for the cable cooling system or the cryogenic cooling unit 7.

The superconducting DC cables 4 are configured to operate by a temperature control of the cryogenic pipeline or cable 8 that ensure that the temperatures are below the material critical transition temperature of the superconducting DC cables 4. Control and protection elements for the superconducting DC unit 2 and the cryogenic cooling unit 7 can communicate with the power conversion unit 5 and/or the converter 11. The operation of the superconducting DC unit 2 and/or the cryogenic cooling unit 7 is preferably monitored and can be controlled to protect the one or more superconducting DC cable 4 in case of malfunctions that could lead to rising temperatures. The one or more superconducting DC cables 4 can be paired with a conventional high voltage cable to supply backup power in case of malfunction or inoperability of the main superconducting cable 4. High voltage protection elements to the superconducting transmission line are either included in the power conversion unit of integral part of the cryogenic circuit of the superconducting DC unit 2.

The embodiments shown in the figures 1 to 5 as stated represent exemplary embodiments of an improved power supply system 100; therefore, they do not constitute a complete list of all embodiments according to possible arrangements. Actual arrangements of the power supply system 100 may vary from the embodiments shown in the figures.

### Reference Signs

- 1: power source / power grid
- 2: power load / consumer / producer
- 3: superconducting DC unit
- 4: superconducting DC cable
- 5: conversion unit
- 6: energy storage system
- 7: cryogenic cooling unit
- 8: cable / pipeline of the cryogenic cooling unit
- 9: AC/DC power converter
- 10: power flow and protection unit
- 11: converter
- 12: converter
- 13: rectifier
- 14: distributor
- 15: fault current limiter
- 100: system

## Claims

1. Electrical power transmission system (100), comprising:
- a power source (1) for supplying power,
- a power load (3) that requires electrical power for operation, and
- a superconducting DC unit (2) that comprises one or more superconducting DC cables (4) that electrically connects the power source (1) and the power load (3) for DC high power transmission such that the system (100) is operatable at a medium voltage in a range of 100 kV or less.

2. Electrical power transmission system (100) according to claim 1, wherein the power source (1) is configured to supply high voltage AC power and the superconducting DC unit (2) is electrically connected to the power source (1) by means of a step down conversion unit (5) such that medium voltage high current DC power is supplied to the superconducting DC unit (2) .

3. Electrical power transmission system (100) according to any of the preceding claims, comprising:
an energy storage system (6) which is electrically connected to the superconducting DC unit (2) and/or the conversion unit (5) to exchange electrical energy.

4. Electrical power transmission system (100) according to claim 3, wherein the conversion unit (5) is configured to control the power flow between the power source (1), the superconducting DC unit (2) and the energy storage system (6) .

5. Electrical power transmission system (100) according to claim 3 or 4, wherein the energy storage system (6) comprises a plurality of energy storage devices working with different operating parameters including different response time and/or power supply requirements.

6. Electrical power transmission system (100) according to any of the preceding claims, wherein the superconducting DC unit (2) is configured to be operatable at a voltage that is matches an operational voltage of the power load (3) and/or an operational voltage of the energy storage system (6).

7. Electrical power transmission system (100) according to any of the preceding claims, comprising:
a cryogenic cooling unit (7) that is coupled to the superconducting DC unit (2) for cooling.

8. Electrical power transmission system (100) according to claim 7, wherein the cryogenic cooling unit (7) comprises a cable and/or a pipeline (8) arranged adjacent to or surrounding a superconducting cable (4) of the superconducting DC unit (2).

9. Electrical power transmission system (100) according to any of the preceding claims, wherein the power source (1) and the power load (3) are connected by means of the superconducting DC unit (2) conversion stepless.

10. Electrical power transmission system (100) according to the claims 1 to 8, wherein the power load (3) is electrically connected to the superconducting DC unit (2) by means of an AC-grid via an AC/DC power converter (9).

11. Electrical power transmission system (100) according to any of the preceding claims, wherein the power load (3) and the superconducting DC cable unit (2) are directly connected undistributed and/or rectifierless.

12. Electrical power transmission system (100) according to any of the preceding claims, comprising:
a power flow and protection unit (10, 15) which is configured to monitor an operation of the superconducting DC unit (2).

13. Electrical power transmission system (100) according to any of the preceding claims, comprising:
one or more conventional high voltage cables electrically coupled to the power load (3) and the power source (1) to provide a backup power supply.
